**Europäisches Patentamt**

**European Patent Office**

**Office européen des brevets**

(19)

(11) **EP 0 928 058 A1**

## (12) DEMANDE DE BREVET EUROPEEN

(43) Date de publication:
**07.07.1999 Bulletin 1999/27**

(51) Int. Cl.$^6$: **H02M 3/158**, H02M 7/538

(21) Numéro de dépôt: **98403338.1**

(22) Date de dépôt: **30.12.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **30.12.1997 FR 9716681**

(71) Demandeur: **THOMSON-CSF**
**75008 Paris (FR)**

(72) Inventeurs:
• **Arnould, Guy**
**94117 Arcueil Cedex (FR)**
• **Boucher, Régis**
**94117 Arcueil Cedex (FR)**

(54) **Dispositif de contrôle en courant d'un convertisseur de tension continue à découpage**

(57)    Le convertisseur de l'invention (18) régule le courant traversant son inductance (28) selon un critère de courant minimal. A cet effet, il comporte un capteur de courant ($RL_1$, $RL_2$) passant par son condensateur de sortie ($C_S$), la mesure étant comparée à une valeur de consigne produite par un générateur de tension en dents de scie à double pente (31). La sortie du comparateur contrôlant une bascule de commande (45) des commutateurs bidirectionnels (Q1, Q2) du convertisseur.

FIG.9

Printed by Xerox (UK) Business Services
2.16.7/3.6

## Description

La présente invention se rapporte à un dispositif de contrôle en courant d'un convertisseur de tension continue à découpage.

La rapidité de commutation des convertisseurs à découpage s'est améliorée au cours des quelques dix dernières années grâce à l'augmentation de la fréquence de découpage d'une part, et grâce au contrôle en courant d'autre part.

Un convertisseur à découpage comporte généralement, dans son circuit série, entre son entrée et sa sortie, une inductance. L'allure du courant qui parcourt cette inductance varie en dents de scie. Il est filtré par un condensateur, de manière à présenter aux bornes de la charge du convertisseur une tension sensiblement continue dont l'ondulation résiduelle soit la plus faible possible.

Le principe du contrôle en courant consiste à asservir le courant passant dans l'inductance, c'est-à-dire le courant entrant dans le condensateur de filtrage, de façon à obtenir à ses bornes une tension constante malgré les variations du courant absorbé par la charge. Ceci revient à ajuster indirectement le courant fourni par le convertisseur au courant demandé par la charge. L'évolution de la tension aux bornes du condensateur mesure le déséquilibre en courant (entre le courant fourni et le courant demandé). Au cours du cycle du convertisseur, celui-ci contrôle la valeur maximale du courant passant dans l'inductance. La valeur de consigne du courant maximal est fournie à un amplificateur de tension d'erreur, qui reçoit d'autre part une ⟨⟨ rampe de convergence ⟩⟩, de manière à assurer un fonctionnement stable du convertisseur quelle que soit la valeur de son rapport cyclique. Ce type de régulation est communément appelé MC2 (⟨⟨ maximum current control ⟩⟩), et a été mis en oeuvre par de très nombreux circuits intégrés. Son principe de fonctionnement est compatible avec tous les convertisseurs, en particulier ceux dont le courant traversant l'inductance s'annule pendant une partie du cycle de découpage.

La régulation de type MC2 étant instable pour un rapport cyclique TON/T compris entre 0,5 et 1, on superpose à la consigne continue une dent de scie qui conventionnellement est issue de l'horloge du convertisseur à découpage.

Cependant, la régulation de type MC2 présente deux inconvénients majeurs dans les applications fonctionnant en régime impulsionnel :

- la réponse du convertisseur à une augmentation du courant de charge présente un retard aléatoire,
- la stabilité de l'asservissement du convertisseur est assurée par le condensateur de filtrage, qui doit être dimensionné en conséquence. La bande passante de l'asservissement en est réduite d'autant.

La présente invention a pour objet un convertisseur de tension continue à découpage régulant sa tension de sortie de la façon la plus efficace possible, le plus indépendamment possible des variations du courant de charge et de sa forme, et ce, avec un condensateur de filtrage de capacité la plus faible possible. En particulier, ce convertisseur doit pouvoir fonctionner avec une charge absorbant un courant à forme impulsionnelle.

Le convertisseur conforme à l'invention, du type comportant un commutateur recevant une tension continue et relié à la charge par une inductance, un condensateur étant branché en parallèle sur la charge, est caractérisé en ce que le commutateur est du type bidirectionnel à au moins deux éléments de commutation dont les entrées de commande sont reliées à un dispositif de commande, lui-même relié à un comparateur dont une entrée est reliée à un capteur de courant de charge et dont une autre entrée est reliée à un dispositif de génération de valeur de consigne du courant minimal dans l'inductance.

De façon avantageuse, une entrée de commande du dispositif de commande est reliée à un dispositif limiteur de courant de sortie du convertisseur.

Egalement de façon avantageuse, le dispositif de génération de la valeur de consigne du courant minimal dans la charge comporte un générateur de tension en dents de scie à double pente dont l'amplitude est modulée par une tension proportionnelle à la tension aux bornes de l'inductance du convertisseur.

Selon une autre caractéristique de l'invention, la charge est alimentée en parallèle sur la même source de courant que le convertisseur, qui fonctionne en correcteur des caractéristiques de la source.

La présente invention sera mieux comprise à la lecture de la description détaillée de plusieurs modes de réalisation, pris à titre d'exemples non limitatifs, illustrés par le dessin annexé sur lequel :

- la figure 1 est un bloc-diagramme simplifiée d'un montage dans lequel un convertisseur conforme à l'invention est utilisé en tant que compensateur de charge impulsionnelle,
- la figure 2 est un chronogramme illustrant le principe de fonctionnement du compensateur de la figure 1, de façon dilatée dans le temps,
- la figure 3 est un chronogramme illustrant de façon dilatée dans le temps le principe de fonctionnement du compensateur de la figure 1,
- la figure 4 est un bloc-diagramme simplifié d'un convertisseur de l'art antérieur à diode de roue libre, non réversible, et d'un convertisseur conforme à l'invention à deux transistors, qui est réversible,
- la figure 5 est un chronogramme illustrant la différence entre un convertisseur à contrôle en courant maximal et un convertisseur à contrôle en courant minimal,
- la figure 6 est un schéma simplifié d'un générateur de tension de consigne en dents de scie à double pente, utilisé dans le convertisseur de l'invention,

- la figure 7 est un chronogramme de tensions relevées dans le générateur de la figure 6,
- les figures 8A à 8D, sont des schémas simplifiés de divers capteurs de courant pouvant être utilisés par le convertisseur de l'invention,
- la figure 9 est un bloc-diagramme détaillé d'un convertisseur conforme à l'invention,
- la figure 10 est un chronogramme de signaux relevés dans le convertisseur de la figure 9,
- la figure 11 est un bloc-diagramme d'un circuit comportant un convertisseur conforme à l'invention et alimentant une charge impulsionnelle en basse tension,
- la figure 12 est un bloc-diagramme d'un circuit de filtrage amélioré d'une tension obtenue par redressement et filtrage classique d'une tension alternative, ce circuit comportant un convertisseur conforme à l'invention,
- la figure 13 est le bloc-diagramme d'un circuit comportant un convertisseur conforme à l'invention et alimentant une charge impulsionnelle en très haute tension,
- la figure 14 est le bloc-diagramme d'un circuit comportant un convertisseur conforme à l'invention et alimentant une charge variable en suivant très rapidement ses variations, et
- la figure 15 est le bloc-diagramme d'un circuit comportant un convertisseur conforme à l'invention et corrigeant le facteur de puissance d'une charge non purement résistive.

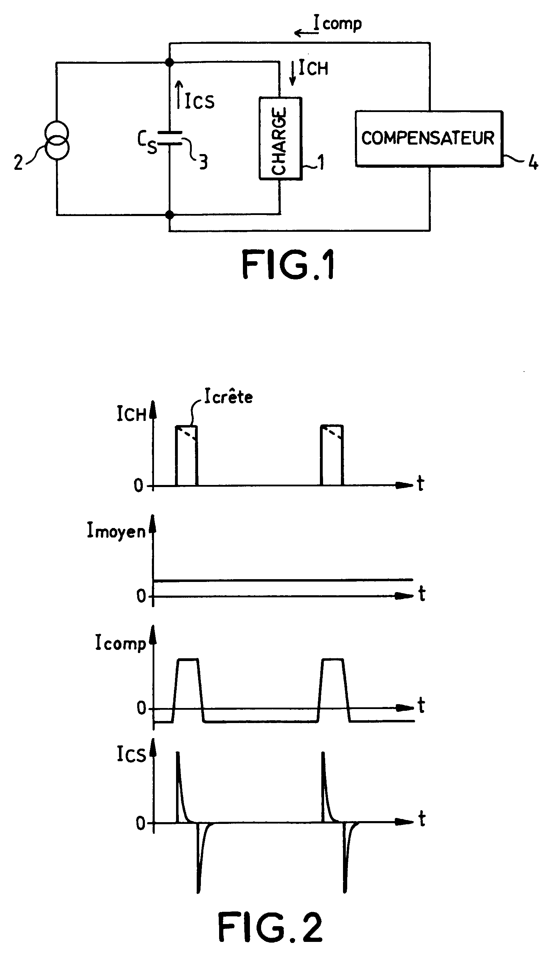

On va tout d'abord examiner en référence à la figure 1 les problèmes liés à l'alimentation par un convertisseur à découpage, utilisé en tant que source de courant ⟨⟨ continu ⟩⟩, d'une charge ⟨⟨ impulsionnelle ⟩⟩ 1, c'est-à-dire d'une charge, telle qu'un circuit de puissance de radar, absorbant un courant $I_{CH}$ à évolution périodique impulsionnelle, comme représenté à la première ligne de la figure 2. Ce courant $I_{CH}$ est nul pendant la majeure partie de chaque période de son cycle, et, pendant une brève partie de la période, passe immédiatement à sa valeur maximale Imax pour redescendre à zéro et y rester pendant tout le reste de la période. Ainsi, comme représenté à la deuxième ligne de la figure 2, la valeur moyenne Imoy de ce courant I est très faible par rapport à Imax.

La charge 1 est alimentée en courant par une source 2 de courant continu. Cette source 2 peut être une source d'alimentation quelconque, par exemple un convertisseur de courant classique. Un condensateur de filtrage 3 est branché à la sortie de la source 2, en parallèle sur la charge 1. Comme expliqué ci-dessus, si l'on désire que le courant fourni à la charge 1 ait réellement l'allure représentée à la première ligne de la figure 2, il faut que le condensateur 3 ait une capacité très importante, sinon le courant décroît avec la décharge du condensateur, comme représenté en trait interrompu à la première ligne de la figure 2.

Pour éviter l'emploi d'un condensateur de filtrage de trop forte capacité, l'invention prévoit de brancher en parallèle sur le condensateur 3 un ⟨⟨ compensateur de charge ⟩⟩ 4 fournissant, comme représenté en troisième ligne de la figure 2 un courant Icomp égal (ou le plus proche possible) à la différence entre $I_{CH}$ et Imoy. Ce compensateur 4 est un convertisseur à découpage (décrit en détail ci-dessous). Dans ce cas, le courant Ics traversant le condensateur 3 peut être pratiquement nul, sauf pendant de très courts instants coïncidant avec les fronts de montée et de descente du signal $I_{CH}$, comme représenté à la quatrième ligne de la figure 2.

Les propriétés principales du compensateur de charge 4 doivent donc être les suivantes :

- il doit avoir un temps de réponse le plus faible possible,
- le courant fourni par le compensateur (Icomp) doit pouvoir changer de signe,
- le courant fourni doit être stable et doit être le plus proche possible de sa valeur théorique ($I_{CH}$-Imoy), ceci, afin de minimiser la valeur du condensateur de filtrage 3.

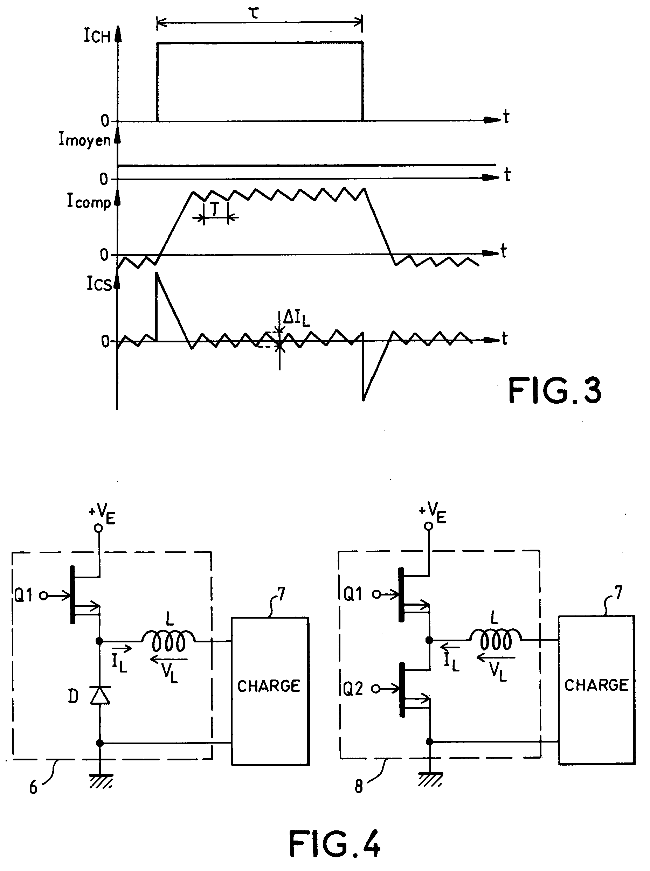

Lorsque, comme représenté à la première ligne de la figure 3, le courant de charge $I_{CH}$ se présente sous forme d'impulsions d'amplitude et de durée élevées, dont la valeur moyenne est, comme représenté à la deuxième ligne de la figure 3, la fonction du compensateur 4 doit être assurée par une alimentation à découpage dont la période T du hacheur doit être faible par rapport à la durée $\tau$ des impulsions du courant de charge. Le courant fourni par le compensateur 4 a alors, comme représenté à la troisième ligne de la figure 3, une forme générale proche de celle des impulsions $I_{CH}$. En fait, en haute résolution, on voit que le courant Icomp varie en dents de scie (de période T) autour de la valeur théorique. Les ondulations résiduelles par rapport à cette valeur théorique sont filtrées par le condensateur 3.

Le compensateur 4 est alors une alimentation à découpage optimisée pour cette recopie la plus proche possible de la forme du courant de charge $I_{CH}$. Cette optimisation est essentiellement réalisée, selon l'invention :

- par le contrôle par valeur minimale de son courant (⟨⟨ contrôle en Imin ⟩⟩) pour minimiser son temps de réponse
- par la mise en oeuvre d'un hacheur à conduction bidirectionnelle (autrement dit, à fonctionnement réversible par rapport à son courant) permettant de fournir un courant pouvant changer de signe, et
- par le contrôle direct du courant de charge, ce qui permet de diminuer la valeur du condensateur de filtrage, sans pour autant altérer la stabilité du convertisseur (système du premier ordre). La stabilité du montage est obtenue par une dent de scie à double pente, asynchrone qui corrige impulsion après impulsion le décalage de la valeur minimale du courant par rapport à la valeur moyenne recherchée.

Le courant Ics traversant le condensateur de filtrage 3 a alors l'allure représentée à la quatrième ligne de la figure 3.

On a représenté, de façon très simplifiée, en figure 4, un convertisseur classique 6 à diode de roue libre alimentant une charge 7 (partie gauche de la figure), et un convertisseur 8 conforme à l'invention, alimentant la même charge 7 (partie droite de la figure).

Le convertisseur classique 6 ne permet pas d'absorber du courant provenant de la charge, du fait que sa diode D bloque un tel courant.

Par contre, le convertisseur 8 de l'invention, grâce à ses deux transistors (ou dispositifs équivalents) Q1 et Q2 montés en série entre les bornes d'arrivée (Ve et Ov ou masse) de la tension continue à découper, permet la circulation bidirectionnelle du courant de charge (à travers l'inductance série L) : vers la charge grâce à Q1 et de la charge via Q2. Ce convertisseur 8 est ici un convertisseur à découpage du type abaisseur (dit montage ⟨⟨ BUCK ⟩⟩). Pour la forme la plus simple de ce convertisseur, la commutation naturelle entre ses deux transistors Q1 et Q2 est assurée par l'inversion du sens du courant passant dans l'inductance L à chaque cycle du hacheur. Le courant minimal de charge Imin est toujours négatif.

Les transistors Q1 et Q2 sont rendus alternativement passants au rythme d'une horloge de période T. Pendant les laps de temps $T_{ON}$ (pendant lequel le courant, pris au sens conventionnel, circule vers la charge, Q1 étant passant et Q2 bloqué), la différence de potentiel (Ve-Vs) est appliquée à l'inductance L, ce qui fait que le courant qui la traverse augmente. Pendant les laps de temps $T_{OFF} = T - T_{ON}$, le transistor Q1 est bloqué et Q2 est passant. Une tension (-Vs), c'est-à-dire la tension de sortie inversée, est appliquée à l'inductance L, ce qui fait décroître le courant qui la traverse.

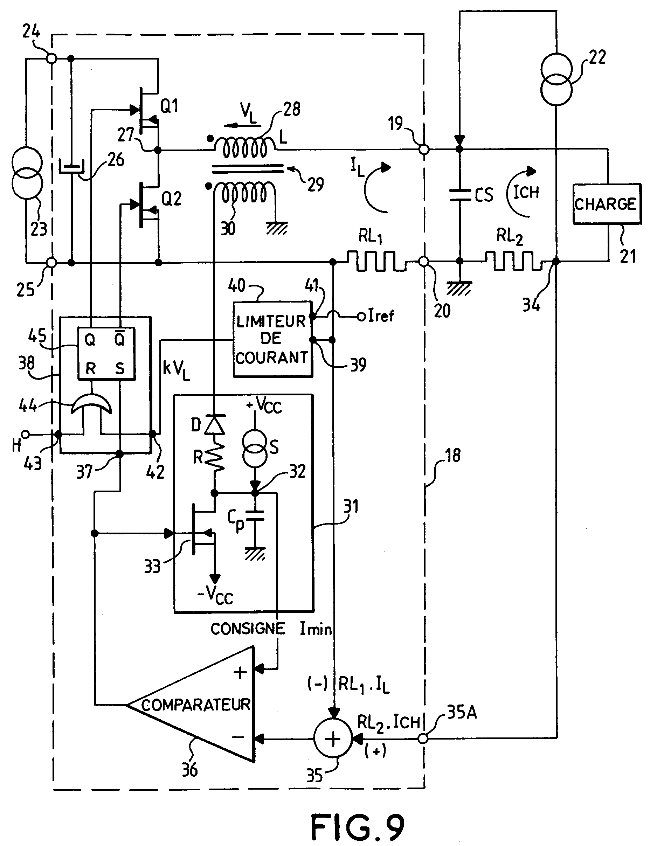

Dans le convertisseur de l'invention (8), la commande de la conduction et du blocage de Q1 et Q2 est assurée par un automate (représenté en figure 9) synchronisé par une horloge. Les convertisseurs connus fonctionnent avec un contrôle de courant en Imax. Le principe de ce contrôle est que les signaux d'horloge déclenchent la phase $T_{ON}$ de croissance du courant traversant l'inductance L et qui dure jusqu'à ce qu'il atteigne la valeur de consigne Imax. Le temps de réponse de tels convertisseurs connus à une variation brutale du courant absorbé par la charge est aléatoire et correspond au temps d'apparition de l'impulsion d'horloge déclenchant la phase $T_{ON}$.

Par contre, le convertisseur de l'invention, qui utilise un contrôle en Imin, réagit pratiquement immédiatement à une variation du courant de charge. En effet, dans ce convertisseur, les signaux d'horloge déclenchent la phase $T_{OFF}$ de décroissance du courant fourni à la charge, et cette phase peut être interrompue dès la détection de l'augmentation du courant absorbé par la charge.

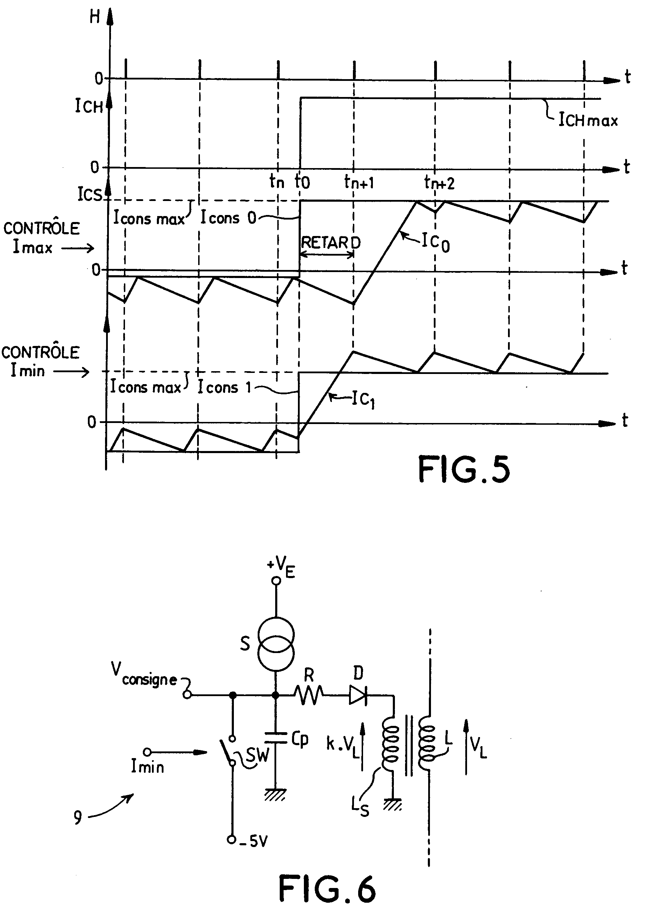

Sur le chronogramme de la figure 5, on a représenté à la première ligne une suite d'impulsions d'horloge H (synchronisant ledit automate), et à la deuxième ligne l'évolution du courant $I_{CH}$ absorbé par une charge alimentée par un convertisseur à découpage. On a représenté à la troisième ligne l'évolution du courant Ico que fournirait à cette charge un convertisseur de l'art antérieur, et à la quatrième ligne l'évolution du courant $I_{C1}$ que fournit à cette charge un convertisseur conforme à l'invention.

On voit sur ce chronogramme que le courant absorbé par la charge est nul jusqu'à l'instant to, et qu'en to il passe brusquement à la valeur $I_L$ max. L'instant to est légèrement postérieur à l'instant tn d'apparition d'une impulsion d'horloge H, et nettement antérieur à l'instant $t_{n+1}$ d'apparition de l'impulsion d'horloge suivante.

Dans le cas du convertisseur connu, son courant de consigne $Icons_o$ est légèrement négatif jusqu'à to, puis à l'instant to il passe brusquement à une valeur $Icons_{max}$. Le courant Ico fourni par ce convertisseur a, jusqu'à l'instant $t_{n+1}$ une allure en dents de scie de faible amplitude, dont les creux coïncident avec les impulsions d'horloge, et dont les crêtes sont alignées sur $Icons_o$. Ce n'est qu'à l'instant $t_{n+1}$ que ce courant Ico peut commencer à augmenter fortement pour rejoindre la valeur $Icons_{max}$, car il ne peut prendre en compte les variations de la tension de consigne qu'à l'apparition d'une impulsion d'horloge, et celle arrivant en tn est antérieure au front montant de la tension de consigne. Le courant Ico atteint $Icons_{max}$ peu avant $t_{n+2}$, ($t_{n+2}$ : impulsion d'horloge suivant celle qui arrive en $t_{n+1}$), et commence à décroître aussitôt. Cette décroissance s'arrête en $t_{n+2}$, et Ico recommence à croître, et ainsi de suite.

Pour le procédé de contrôle en Imin de l'invention, la tension de consigne Icons $_1$ est négative jusqu'en to, mais nettement plus négative que $Icons_o$.

A partir de to, la tension de consigne $Icons_1$ passe brusquement à la valeur $Icons_{max}$ et s'y maintient aussi longtemps que $I_{CH}$ est à sa valeur maximale. La tension $I_{c1}$ a une allure en dents de scie de faible amplitude jusqu'à to, ses creux étant alignés sur Icons1, ses crêtes correspondant aux instants d'apparition des signaux d'horloge H. Dès l'instant to, la tension $I_{c1}$ augmente rapidement (avec la même pente qu'avant to, et ce, qu'elle ait été dans une phase de croissance ou de décroissance à l'instant to), dépasse $Icons_{max}$ et sa croissance s'arrête à l'instant $t_{n+1}$. A partir de $t_{n+1}$ $I_{c1}$ décroît jusqu'à atteindre $Icons_{max}$, puis recommence à croître jusqu'en $t_{n+2}$, et ainsi de suite tant que la tension de consigne ne varie pas. On voit donc que le procédé de contrôle en Imin de l'invention permet au convertisseur de suivre les variations brusques du courant absorbé par la charge beaucoup plus rapidement que le procédé de contrôle en Imax. On notera que sur la figure 5 l'amplitude des dents de scie en «régime établi» (c'est-à-dire en-dehors de la transition entre $t_o$ et $t_{n+1}$) est exagérée pour la clarté du dessin, et qu'en réalité cette amplitude est généralement beaucoup plus faible que $I_{CHmax}$.

Comme on l'a vu d'après le chronogramme de la figure 3, à la dernière ligne, en régime établi (c'est-à-dire en-dehors des pointes de courant correspondant aux fronts de montée et de descente du courant réclamé par la charge), le courant passant par le condensateur Cs a une valeur moyenne nulle. Les ondulations (de valeur moyenne nulle) sont de relativement faible amplitude ($\Delta I_L$) et correspondent au courant traversant l'inductance L du convertisseur (voir figure 4). La valeur Icons1 de courant minimum dans l'inductance L correspond à l'annulation du courant dans le condensateur, soit :

$$I_{cons\ 1} = I_{Ch} - I_{L\ min} \text{ (à l'équilibre)} = \Delta I_{L/2}.$$

Ce décalage négatif de la tension de consigne avant to dépend des paramètres du convertisseur :

$$\frac{\Delta II}{2} = \frac{T}{2L} \cdot \frac{VS}{VE} \cdot (VE - VS)$$

expression dans laquelle:

T est la période de l'horloge du convertisseur,
L est la valeur de son inductance
$V_E$ sa tension d'entrée et
$V_S$ sa tension de sortie.

T et L sont des valeurs constantes, contrairement à VE et VS. Par conséquent, l'amplitude de la tension de consigne doit répondre à deux conditions :

- elle doit fluctuer avec les évolutions de VE et VS en suivant la loi exprimée ci-dessus,
- elle doit présenter une rampe de convergence assurant la stabilité du convertisseur quelle que soit la valeur du rapport VS/VE, entre les limites $0 \leq VS/VE \leq 1$.

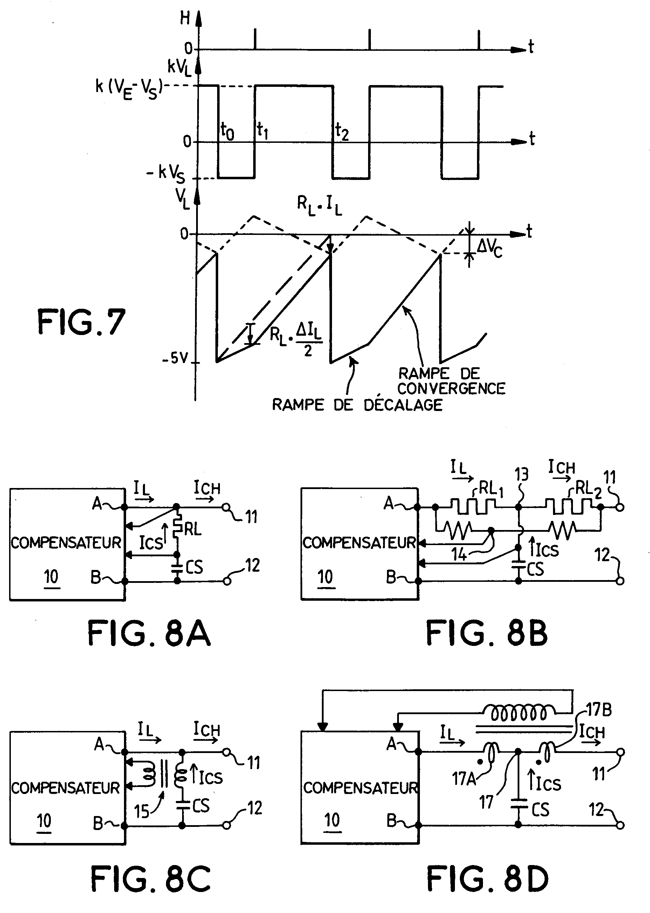

Il en résulte que, comme représenté en figure 7, la tension de consigne a une allure en dents de scie avec deux valeurs différentes de pente ascendante, permettant de moduler son amplitude. Cette partie ascendante est déterminée par la charge à courant constant d'un condensateur (condensateur Cp, figure 6), déchargé (en fait, relié à une tension négative de -5V par exemple) à chaque période du signal d'horloge. Les changements de pente sont commandés en fonction de la tension aux bornes de l'inductance L. La valeur de la tension minimale aux bornes de L (fig 5 : avant to) est égale à la valeur crête de la tension en dents de scie à pente double. Bien entendu, après to, on ajoute à cette valeur la valeur du saut de tension correspondant au courant réclamé par la charge.

Sur le schéma de la figure 6, on a représenté les éléments essentiels du générateur 9 de tension de consigne de l'invention. On y a également représenté l'inductance L du convertisseur à laquelle est couplée une inductance secondaire $L_S$, ces deux inductances formant un transformateur dont L représente l'enroulement primaire et $L_S$ l'enroulement secondaire. Le couplage de ces deux inductances n'a pas besoin d'être serré : il suffit que l'on recueille aux bornes de $L_S$ une tension exploitable (quelques volts) par le circuit branché en aval. L'inductance $L_S$ est reliée en parallèle à un circuit comportant, en série, une diode D, une résistance R et un condensateur Cp. Le point commun à la résistance R et au condensateur Cp est relié, d'une part, à une source de courant S et, d'autre part, à une tension négative (de -5V par exemple) par l'intermédiaire d'un commutateur électronique SW commandé par un circuit, décrit plus loin, de détection du minimum du courant traversant l'inductance L. Le point commun de R et de Cp constitue en outre la sortie du circuit 9.

Sur le chronogramme de la figure 7, on a représenté à la première ligne les impulsions d'horloge H synchronisant les circuits du convertisseur. A la deuxième ligne, on a représenté la tension k.VL aux bornes de l'inductance $L_S$. A la troisième ligne, on a représenté, en traits interrompus courts, le courant à travers l'inductance L, en trait continu la tension de consigne (produite par le générateur 9), et en trait interrompu long l'évolution du courant à travers l'inductance avec une montée à rampe unique.

Le courant dans l'inductance L a une allure en dents de scie. La décroissance de ce courant est commandée par les impulsions d'horloge H, et cette décroissance s'arrête lorsque le courant atteint une valeur minimale (déterminée par un comparateur, décrit ci-dessous en référence à la figure 9).

La tension de consigne a également une allure en dents de scie. La fin de la partie croissante de ces dents de scie est déterminée par les minima successifs du courant traversant l'inductance L. A ce moment (instant to), l'automate (décrit ci-dessous en référence à la figure 9) bloque le transistor Q1, qui était passant jusque-là (fig. 4 et 9) et débloque Q2. La tension aux bornes de l'enroulement Ls, qui était jusque-là égale à $k \cdot (VE-VS)$, k étant le rapport de transformation entre L et $L_S$, passe brusquement à $-kV_S$. Simultanément, la tension de consigne passe à -5V (du fait de la fermeture du commutateur SW, qui relie directement à -5V la sortie du générateur 9 de tension de consigne).

Jusqu'à l'instant t1 (apparition de la première impulsion d'horloge H après to), la tension aux bornes de l'inductance L augmente. De même, la tension de consigne augmente, avec une pente croissante qui est fonction de la pente croissante de la tension aux bornes de $L_S$.

A l'instant t1, une impulsion d'horloge H commande, via ledit automate, l'inversion des états des transistors Q1 et Q2, ce qui déclenche la décroissance du courant traversant l'inductance L et fait brusquement passer la tension aux bornes de $L_S$ de $-kV_S$ à $k$ ($V_E - V_S$). Simultanément, la remontée de la tension aux bornes de L commande l'ouverture du commutateur SW, ce qui déclenche le début de la recharge du condensateur Cp par la source S. La constante de temps de charge de Cp est déterminée de façon que la pente de croissance de la tension de consigne entre $t_1$ et $t_2$ ($t_2$ étant la fin de la période du cycle commençant en to, c'est-à-dire l'instant où le courant dans l'inductance L atteint la valeur minimale de consigne) soit nettement supérieure à la pente de croissance de cette même tension de consigne entre to et $t_1$. Sur la figure 7, on a tracé en traits interrompus longs, entre to et $t_2$, la caractéristique virtuelle de la tension de consigne, telle qu'elle serait si le commutateur SW s'ouvrait à l'instant to. Cette caractéristique virtuelle présente, à chaque instant compris entre $t_1$ et $t_2$, une tension supérieure à celle de la caractéristique réelle, la différence étant égale à $R_L \cdot \Delta I_L/2$,, $R_L$ étant la résistance ohmique de l'inductance L et $\Delta I_L$ étant, comme précisé ci-dessus, le décalage par rapport à zéro du courant dans l'inductance L permettant d'obtenir l'annulation du courant dans $C_S$, et donc l'équilibre en valeur moyenne entre le courant du dispositif compensateur de l'invention et celui fourni à la charge. Ainsi, la partie de caractéristique de tension de consigne entre $t_o$ et $t_1$ correspond à la phase d'approche dudit équilibre, tandis que la partie de caractéristique entre t1 et t2 correspond à la phase de convergence du dispositif, c'est-à-dire à la phase dont la fin coïncide avec l'instant où le courant traversant l'inductance L atteint la valeur minimale de consigne.

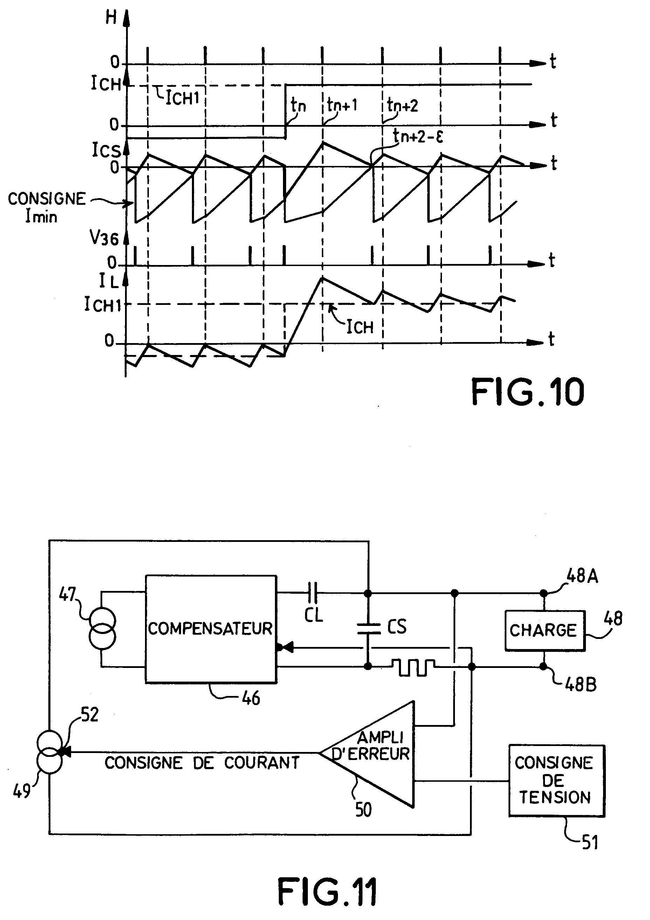

Le diagramme de la figure 7 se rapporte au cas où le courant de charge est constant, mais il est bien entendu que lorsqu'il varie, les pics de la tension de consigne se déplacent, de même que les minima du courant traversant le condensateur $C_S$, comme illustré en figure 10.

Puisque la tension de consigne appliquée au dispositif de l'invention correspond sensiblement à l'équilibre entre le courant entrant ($I_L$) dans le condensateur de filtrage $C_S$ et le courant en sortant ($I_{CH}$), il suffit de munir ce dispositif d'un capteur de courant de ce condensateur. Ce capteur peut être soit une résistance (figures 8A, 8B), soit un transformateur (figures 8C, 8D) puisque la composante continue dudit courant est nulle.

Sur les figures 8A à 8D, on a seulement représenté le convertisseur ou compensateur 10 de l'invention, sans le détailler, le condensateur $C_S$ et différents modes de réalisation du capteur de courant de ce condensateur, conformément à l'invention. Les bornes communes à la charge et à la sortie de la source de courant alimentant cette charge sont référencées 11 et 12. Entre ces bornes est branché le condensateur $C_S$ (en série avec des éléments du capteur de courant). Les sorties du compensateur 10 sont reliées à ces bornes 11, 12 directement ou par des éléments du capteur de courant.

En figure 8A, le capteur de courant comporte simplement une résistance $R_L$, branchée en série avec le condensateur $C_S$. Il suffit de mesurer la tension aux bornes de $R_L$ pour déterminer le courant $I_{CS}$ traversant $C_S$.

En figure 8B, le capteur de courant comporte deux résistances principales $R_{L1}$ et $R_{L2}$ branchées en série entre la borne 11 et la sortie correspondante du compensateur 10, ainsi que deux autres résistances R1, R2 branchées en série l'une avec l'autre, en parallèle sur le circuit série formé par $R_{L1}$ et $RL_2$. La mesure de $I_{CS}$ s'effectue par détermination de la tension entre le point 13 commun à $RL_1$ et $RL_2$ et le point 14 commun à R1 et R2. Cette tension est fonction de la différence entre le courant $I_L$ de sortie du compensateur 10 (et traversant $R_{L1}$) et le courant de charge Ich (traversant $R_{L2}$).

En figure 8C, le capteur de courant comporte un transformateur 15 dont l'enroulement primaire est branché en série avec $C_S$ et dont l'enroulement secondaire fournit une tension qui est donc fonction du courant $I_{CS}$ traversant $C_S$.

En figure 8D, le capteur de courant compote un transformateur 16, à deux enroulements primaires 17A, 17B branchés électriquement en série, mais bobinés en sens contraires. Le condensateur $C_S$ est branché entre la borne 12 et le point commun 17 des enroulements 17A et 17B. La tension de mesure est recueillie aux bornes de l'enroulement secondaire du transformateur 16. Du fait de l'opposition des flux des enroulements 17A, 17B, le secondaire du transformateur 16 produit une tension qui est fonction de la différence des courants traversant 17A et 17B, c'est-à-dire de la différence entre $I_l$ (traversant 17A) et $I_{CH}$ (traversant 17B), donc du courant $I_{CS}$.

Bien entendu, le compensateur 10 comporte des circuits appropriés à l'exploitation de la tension produite par le capteur de l'une des figures 8A à 8C. Cette tension de capteur est envoyée aux bornes A et B du compensateur 10. Ces bornes correspondent aux entrées (+) et (-) de l'additionneur 35 de la figure 9.

On notera que le mode de réalisation de la figure 8A ou 8B permet d'une part d'assurer une limitation du courant fourni par le compensateur en cas de court-circuit des circuits branchés en aval, et, d'autre part, d'avoir un convertisseur pratiquement apériodique (alors que les modes de réalisation à transformateur ont une bande passante bien plus limitée).

On a représenté en figure 9 un mode de réalisation avantageux du convertisseur conforme à l'invention. Ce convertisseur 18, utilisé ici en compensateur, a des bornes de sortie 19, 20 auxquelles est directement relié un condensateur $C_S$. Une charge 21, alimentée par une source principale de courant 22 est reliée, d'une part directement à la borne 19, et d'autre part, à travers une résistance $RL_2$ (résistance de capteur de courant, comme en figure 8B) à la borne 20. Cette borne 20 est reliée à la masse.

Le convertisseur 18 est alimenté par une source auxiliaire de courant 23, branchée à ses bornes d'alimentation 24, 25.

On va maintenant décrire les circuits composant le convertisseur 18. Un condensateur de lissage 26 (qui peut être omis si le courant de la source 23 ne présente pas d'ondulations) est relié aux bornes 24, 25. En parallèle sur le condensateur 26, on branche en série les transistors Q1 et Q2 Leur point commun est relié à la borne de sortie 19 par l'enroulement primaire 28 d'un transformateur 29. La borne 25 est reliée par une résistance $RL_1$ à la borne 20. L'enroulement secondaire 30 du transformateur 29 est relié à un circuit 31 générateur de tension de consigne, similaire à celui de la figure 6.

Le circuit 31 comporte un circuit série, composé d'une diode D, d'une résistance R et d'un condensateur Cp, ce circuit série étant en parallèle avec l'enroulement 30. Une source de courant 9 est reliée au point commun 32 de R et Cp. Le point 32 est relié par un transistor de commutation 33 à un potentiel négatif -Vcc (de -5V par exemple). La borne 34 commune à $RL_2$ et à la charge 21 est reliée à une borne d'entrée 35A du circuit 18. Cette borne 35A est reliée à l'entrée (+) d'un additionneur 35 dont l'entrée (-) est reliée à la borne 25. La sortie de l'additionneur 35 est reliée à l'entrée (-) d'un comparateur 36 dont l'entrée (+) est reliée à la borne 32. La sortie du comparateur 36 est reliée d'une part à l'entrée de commande (grille) du transistor 33 et d'autre part à une entrée 37 de l'automate 38 de commande des transistors Q1 et Q2. La borne 25 est, par ailleurs, reliée à une entrée 39 d'un comparateur 40 dont l'autre entrée 41 reçoit un signal de référence correspondant à une valeur de courant de sortie maximal que ne doit pas dépasser le convertisseur 18.

La sortie du comparateur 40 est reliée à une entrée 42 de l'automate 38. Une troisième entrée 43 de l'automate 38 reçoit lesdits signaux d'horloge H, produits de façon connue en soi.

L'automate 38 comporte, selon le mode de réalisation représenté, une porte logique OU référencée 44. La première entrée de la porte 44 est reliée à l'entrée 43, et sa deuxième entrée est reliée à l'entrée 42. La sortie de la porte 44 est reliée à une entrée (par exemple l'entrée R) d'une bascule bistable de type RS référencée 45. L'autre entrée (S) de la bascule 45 est reliée à l'entrée 37. Les sorties (Q et $\overline{Q}$) de la bascule 45 sont reliées aux électrodes de commande (grilles) des transistors Q1 et Q2, respectivement.

On a représenté sur le chronogramme de la figure 10 plusieurs signaux relevés dans le dispositif de la figure 9. A la première ligne, on a représenté les signaux d'horloge H appliqués à l'entrée 43. A la deuxième ligne, on a représenté l'évolution du courant de la charge $I_{CH}$, à la troisième ligne l'évolution du courant passant dans le condensateur $C_S$ et l'évolution de la tension de consigne, à la quatrième ligne les impulsions (V36) de sortie du comparateur 36, et à la cinquième ligne l'évolution du courant de sortie du convertisseur, c'est-à-dire du courant traversant l'enroulement 28 constituant l'inductance L du convertisseur.

Le courant $I_{CH}$ absorbé par la charge passe brusquement, à l'instant $t_n$, d'une valeur nulle à une valeur $I_{CH1}$, à laquelle il se maintient pendant plusieurs périodes du signal d'horloge H.

Avant l'instant $t_n$, le courant $I_{cs}$ dans le condensateur Cs évolue suivant une forme d'onde en dents de scie de faible amplitude autour de zéro. A chacun des minima de la dent de scie, atteignant la valeur de référence présente à la borne 32, le comparateur 36 émet à sa sortie une impulsion (quatrième ligne de la figure 10), car la tension de consigne s'effondre aussitôt après que $I_{cs}$ a atteint le minimum du fait de la décharge brusque du condensateur Cp. De même, avant l'instant $t_n$, le courant $I_L$ traversant l'enroulement 28 évolue en forme de dents de scie autour d'une valeur légèrement négative.

A l'instant $t_n$, du fait de la brusque augmentation du courant $I_{CH}$, le courant $I_{CS}$ ($I_{CS} = I_L - I_{CH}$) descend brusquement à un valeur fortement négative, ce qui fait que la montée de la tension de consigne est arrêtée prématurément, et elle descend brusquement jusqu'au minimum précédent. Le courant $I_L$, qui était en phase de décroissance depuis l'impulsion d'horloge précédant $t_n$, se met à croître à partir de l'instant $t_n$, jusqu'à l'impulsion d'horloge suivante (instant $t_{n+1}$). Toutefois, on notera que si $I_L$ atteint la valeur maximale déterminée par le circuit 40 avant l'intrant $t_{n+1}$, il se met alors aussitôt à décroître jusqu'à $t_{n+1}$, car le circuit 40 provoque alors le basculement de la bascule 45 qui commande l'inversion des états de Q1 et Q2.

A partir de l'instant $t_n$, la croissance de $I_L$ entraîne la croissance de $I_{cs}$ qui croît jusqu'à l'instant $t_{n+1}$. A cet instant $t_{n+1}$, l'impulsion d'horloge provoque l'inversion de la bascule 45, et donc déclenche le début de la décroissance de $I_L$ ainsi que de $I_{CS}$ ($I_{CH}$ restant constant par hypothèse). Dans l'exemple illustré en figure 10, le courant $I_{CS}$ atteint un minimum peu avant l'instant $t_{n+2}$ (instant d'apparition de la deuxième impulsion d'horloge après $t_n$), lorsque $I_{CS}$ atteint une valeur égale à la valeur de consigne au point 32. A cet instant ($t_{n+2 - \varepsilon}$) $I_L$ est sensiblement égal à $I_{CH}$ et la tension de consigne passe brusquement à sa valeur minimum, ce qui provoque le basculement de la bascule 45. Le basculement déclenche, comme précédemment une nouvelle croissance de $I_L$ et de $I_{CS}$, mais à l'instant $t_{n+2}$ l'impulsion d'horloge provoque un nouveau basculement de la bascule 45, et donc la décroissance de $I_L$ et de $I_{CS}$. Ainsi, après $t_{n+2}$, les minima et maxima de $I_L$ ont des valeurs sensiblement symétriques par rapport à $I_{CH}$ ($I_{CH}$ restant égal à $I_{CH1}$) et de faible amplitude. De même, les minima et maxima de $I_{CS}$ sont symétriques par rapport à zéro. Il en résulte que le courant $I_L$ suit le plus fidèlement possible les variations de $I_{CH}$ (on notera que, pour la clarté du dessin, la période du signal d'horloge a été exagérée, et qu'en fait le courant $I_L$ reproduit encore plus fidèlement les variations de $I_{CH}$ que représenté sur le dessin).

Ainsi, avec le compensateur de l'invention, l'énergie de la source auxiliaire 23 peut être juste suffisante pour couvrir les pertes du compensateur. En effet, ce compensateur se comporte en récepteur d'énergie entre deux impulsions successives du courant absorbé par la charge, la source de courant principal 22 étant alors la source d'énergie.

On remarquera que le condensateur d'entrée 26, qui a un rôle de stockage d'énergie, fait partie des éléments externes à la fonction compensateur, de même que le condensateur $C_S$ et la résistance RL$_2$ (qui dépendent de l'application).

On a représenté en figure 11 le bloc-diagramme d'un dispositif de compensation d'une charge impulsionnelle en basse tension (par exemple pour une tension de sortie de quelques centaines de volts au maximum), utilisant un compensateur conforme à l'invention.

Le compensateur 46, similaire au compensateur 18 de la figure 9, muni de sa source auxiliaire 47, a une des ses sorties reliée à la charge 48 par un condensateur de liaison $C_L$, son autre sortie étant reliée à la charge 48 par une résistance RL$_2$ (similaire à celle de la figure 9). Une source de courant principal 49 est reliée aux deux bornes 48A, 48B auxquelles est reliée la charge 48. Un amplificateur de tension d'erreur 50 est relié d'une part aux bornes de la charge 48 et d'autre part à un circuit 51 fournissant une tension de consigne. La sortie de l'amplificateur 50 est reliée à l'entrée 52 de commande de courant de la source 49.

Dans ce dispositif de la figure 11, le compensateur 46 fournit à la charge 48 le courant de compensation à travers le condensateur $C_L$, aux bornes duquel l'excursion de tension est voisine de la tension d'entrée du compensateur, c'est-à-dire la tension aux bornes de la source 47. Au moment où se présente une impulsion d'appel de courant de la charge 48, le condensateur $C_L$ est chargé. Il en résulte que la tension appliquée à l'inductance L du compensateur (voir figures 4 et 9) est voisine de la tension d'entrée du compensateur. Par conséquent, le courant de sortie du compensateur atteint très rapidement la valeur réclamée par la charge, bien que cette valeur atteigne plusieurs fois la valeur du courant résiduel en régime établi (c'est-à-dire à courant de charge nul) à travers l'inductance L. Au fur et à mesure de la décharge de $C_L$, le rapport $T_{ON}/T_{OFF}$ des transistors de commutation du compensateur évolue, ainsi que les pentes de croissance et de décroissance du courant passant dans l'inductance L.

Le gain G en capacité du condensateur $C_S$ par rapport à un montage sans compensateur est fonction de la précision $\chi$ recherchée pour la tension de sortie (VS), avec

$$\chi = \frac{\Delta Vs}{Vs}$$

($\Delta Vs$ = écart entre la tension de sortie réelle et la tension de sortie désirée en présence de l'impulsion). Soit $|C_{SO}|$ la capacité du condensateur $C_S$ sans compensateur, et $|C_S|$ et $|C_L|$ les capacités des condensateurs $C_S$ et $C_L$ du compensateur de la figure 11. le gain G est donné par la formule :

$$G = \frac{|Cs| + |Cl|}{|Cso|} \cong \chi$$

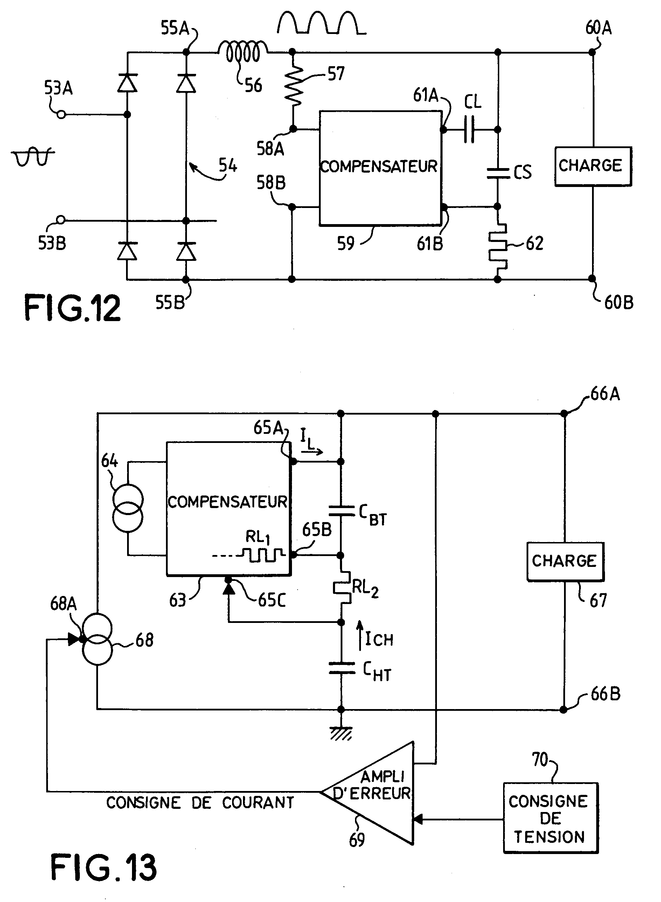

On a représenté en figure 12 le bloc-diagramme d'un dispositif de filtrage d'une tension obtenue par redressement et filtrage d'une tension alternative, ce dispositif utilisant le compensateur de l'invention.

La tension alternative est appliquée à l'entrée (bornes 53A, 53B) d'un pont redresseur 54, dont les bornes de sorties sont référencées 55A, 55B. La borne 55A est reliée par une inductance de filtrage 56, en série avec une résistance 57 à une borne d'entrée 58A du compensateur 59, tandis que la borne 55B est directement reliée à l'autre borne d'entrée 58B du compensateur 59. Le point commun de l'inductance 56 et de la résistance 57 est relié à une borne de sortie 60A du dispositif de filtrage. Une sortie 61A du compensateur 59 est reliée par un condensateur $C_L$ à la borne 60A. Son autre sortie 61B est reliée par une résistance 62 à la borne de sortie 60B. Un condensateur $C_S$ est branché entre la borne 60A et la borne 61B.

Dans le dispositif de filtrage de la figure 12, le compensateur 59 est similaire au compensateur 18 de la figure 9, et les condensateurs $C_L$ et $C_S$ ont des rôles analogues à ceux des condensateurs $C_L$ et $C_S$ de la figure 11. Dans ce dispositif de filtrage, ce n'est pas la charge qui est source de perturbation, mais le courant fourni par le réseau alternatif, après redressement. Vu du compensateur 59, la fonction de compensation est la même que pour le compensateur 46. La réduction de capacité du condensateur $C_S$ permet de diminuer le courant d'appel à la mise sous tension du dispositif de filtrage (pour charger $C_S$).

On a représenté en figure 13 le bloc-diagramme d'un dispositif de compensation d'une charge impulsionnelle fonctionnant en très haute tension (T.H.T.), ce dispositif utilisant le compensateur de l'invention.

Le compensateur 63 est alimenté par une source auxiliaire 64. Sa borne de sortie 65A est reliée à la borne ⟨⟨ positive ⟩⟩ 66A de la charge 67. Son autre borne de sortie 65B est reliée par une résistance RL$_2$ en série avec un condensateur C$_{HT}$ à la borne 〈〈 négative 〉〉 (relié à la masse dans le cas présent) 66B de la charge 67. Un condensateur C$_{BT}$ est branché entre les bornes 65A et 65B. Une source de courant principale 68 est reliée aux bornes 66A, 66B de la charge 67. Un comparateur 69 est relié d'une part aux bornes de la charge, et d'autre part à un circuit 70 de production de tension de consigne. La sortie du comparateur 69 est reliée à l'entrée 68A de commande de courant de la source 68. Le point commun à RL$_2$ et C$_{HT}$ est relié à l'entrée 63C du compensateur (analogue à l'entrée (+) du comparateur 36 de la figure 9).

Dans le dispositif de la figure 13, le compensateur 63 est chargé par un condensateur basse tension (C$_{BT}$) monté en série avec un condensateur haute-tension (C$_{HT}$). Ainsi, toute variation de tension aux bornes de C$_{HT}$ est compensée par une variation équivalente aux bornes de C$_{BT}$. Tout se passe comme si C$_{BT}$ et C$_{HT}$ étaient vus en parallèle par le compensateur. Soient I$_L$ le courant de sortie du compensateur 63, I$_{CH}$ le courant traversant C$_{HT}$ et RL$_2$, | RL$_1$ | et | RL$_2$ | les valeurs des résistances RL$_1$ et RL$_2$, | C$_{BT}$ | et | C$_{HT}$ | les capacités respectives des condensateurs C$_{BT}$ et C$_{HT}$. On a alors :

$$I_L = (1 + \frac{C_{BT}}{C_{HT}}) \cdot I_{CH}, \text{ d'où :}$$

$$RL_2 = (1 + \frac{C_{BT}}{C_{HT}}) \cdot RL_1$$

Le gain en capacité pour le condensateur C$_{HT}$ peut être estimé ainsi. Le volume d'un condensateur est généralement proportionnel à l'énergie qu'il peut stocker et à la tension qu'il peut supporter. Si la tension aux bornes de C$_{BT}$ est très faible par rapport à la tension aux bornes de C$_{HT}$, sa capacité est aussi très faible par rapport à celle de C$_{HT}$. Ainsi, par exemple, si le courant absorbé par la charge 67 présente une impulsion d'une amplitude de 2,5 A sous une tension de 12 kV pendant 100 μs, et que l'on souhaite obtenir une précision de 1‰, soit 12V sur la tension aux bornes de la charge, sans le compensateur de l'invention, le condensateur haute tension qui serait seul branché aux bornes de la charge devrait avoir une capacité d'environ 22 μF. Grâce au compensateur de l'invention, dans le dispositif de la figure 13, la capacité de C$_{HT}$ doit être seulement d'environ 0,47 μF, soit un gain en capacité de l'ordre de 50.

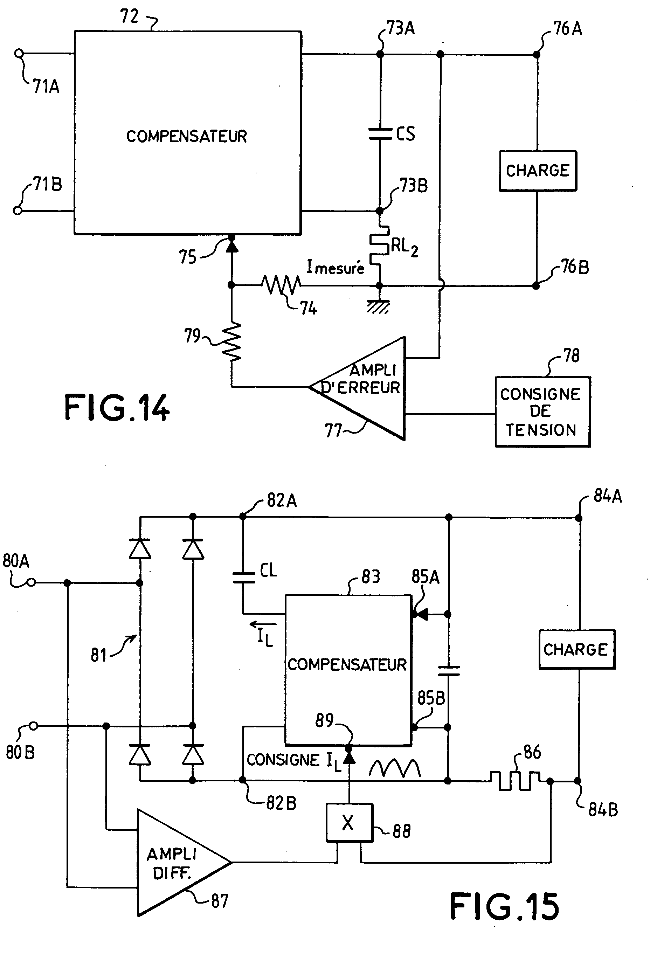

On a représenté en figure 14 un dispositif d'alimentation 〈〈 ultra rapide 〉〉 d'une charge à tension et/ou courant variables, à partir d'une tension d'alimentation non régulée. Cette tension non régulée est appliquée aux bornes 71A, 71B qui sont les bornes d'entrée du compensateur 72, dont les bornes de sortie sont référencées 73A, 73B. Le condensateur C$_S$ est branché entre les bornes 73A, 73B. La résistance RL$_2$ est branchée entre la borne 73B et la masse. Une résistance 74 est branchée entre la masse et l'entrée de commande 75 du compensateur 72 (l'entrée 75 est la même que l'entrée 35A de la figure 9). Les bornes de sortie du dispositif de la figure 14 sont référencées 76A, 76B. La borne 76A est directement reliée à la borne 73A, et la borne 76B est reliée à la masse. Un amplificateur d'erreur 77 est branché en entrée entre la borne 76A et un circuit 78 fournissant une tension de consigne. La sortie de l'amplificateur 77 est reliée par une résistance 79 à l'entrée 75 du compensateur 72.

Dans les applications décrites ci-dessus en référence aux figures 11 à 13, le compensateur n'a pas de fonction de régulateur de tension (ou de courant). C'est en fait la source principale, dont le courant moyen est asservi aux variations du courant de charge ou à une valeur fixe, qui assure cette fonction de régulateur. De telles applications sont performantes grâce au fait que le rapport entre l'amplitude des impulsions de courant et la valeur moyenne de ce courant est important.

Dans d'autres applications, pour lesquelles, par exemple, la source principale n'est soumise qu'à des successions de régimes de charge et de décharge dus à des opérations de délestage, la fonction de régulation est assurée par le compensateur, comme c'est le cas pour le dispositif décrit ci-dessus en référence à la figure 14. Son point de fonctionnement est asservi directement par l'amplificateur d'erreur 77 qui corrige le courant de charge tel que mesuré, ce qui assure la fonction de régularisation.

On a représenté en figure 15 un dispositif de correction de facteur de puissance utilisant un compensateur conforme à l'invention. Ce dispositif a pour rôle d'asservir le courant du réseau à sa tension en vue de corriger le facteur de puissance de la charge seule.

Le dispositif de la figure 15 a deux bornes d'entrée 80A, 80B alimentées par un réseau alternatif. Un pont redresseur 81 est relié à ces bornes d'entrée. Les bornes de sortie du pont 81 sont référencées 82A,82B. La borne 82A est reliée par un condensateur C$_L$ à une entrée du compensateur 83, tandis que la borne 82B est directement reliée à l'autre entrée du compensateur 83. La borne 82A est reliée par ailleurs à la borne de sortie 84A du dispositif de correction à laquelle est également reliée une borne de sortie 85A du compensateur. L'autre borne de sortie 85B du compensateur est reliée directement à la borne 82B, et par une résistance 86 à la borne de sortie 84B du dispositif de correction. Les entrées d'un amplificateur différentiel 87 sont reliées aux bornes 80A, 80B. Sa sortie est reliée à une entrée d'un multiplieur 88 dont l'autre entrée est reliée à la borne 84B. La sortie du multiplieur 88 est reliée à l'entrée de commande 89 du compensateur (similaire à l'entrée 35A de la figure 9). Un compensateur C$_S$ est branché entre les bornes 85A, 85B.

**Revendications**

1. Convertisseur de tension continue à découpage, du type comportant un commutateur (Q1, Q2) recevant une tension continue et relié à la charge par une inductance (L), un condensateur ($C_S$) étant branché en parallèle sur la charge, caractérisé par le fait que le commutateur est du type bidirectionnel à au moins deux éléments de commutation (Q1, Q2) dont les entrées de commande sont reliées à un dispositif de commande (88) recevant des signaux d'horloge (43), lui-même relié à un compensateur (36) dont une entrée est reliée à un capteur de courant de charge ($RL_2$) et dont une autre entrée est reliée à un dispositif (31) de génération de valeur de consigne du courant minimal dans l'inductance.

2. Convertisseur selon la revendication 1, caractérisé par le fait que le dispositif de commande est relié à un dispositif (40) limiteur de courant de sortie du convertisseur.

3. Convertisseur selon la revendication 1 ou 2, caractérisé par le fait que le dispositif de génération de la valeur de consigne du courant minimal dans la charge comporte un générateur de tension en dents de scie (D, R, Cp, 33) à double pente dont l'amplitude est modulée par une tension proportionnelle à la tension aux bornes de l'inductance du convertisseur (30).

4. Convertisseur selon l'une des revendications précédentes caractérisé par le fait que la charge (1, 21, 48, 67) est alimentée par une source de courant principale (2, 23, 49, 68), le convertisseur (4, 18, 46, 63) fonctionnant en compensateur des caractéristiques de la charge.

5. Convertisseur selon l'une des revendications 1 à 3, caractérisé par le fait que la charge (60A-60B, 84A-84B) est alimentée en parallèle sur la même source de courant (53A-53B, 80A-80B) que le convertisseur (59, 83) qui fonctionne en correcteur des caractéristiques de la source.

6. Convertisseur selon l'une des revendications 1 à 3, caractérisé par le fait que la charge (76A-76B) est alimentée à travers le convertisseur (72) fonctionnant en régulateur d'alimentation.

## FIG.1

## FIG.2

FIG.3

FIG.4

FIG.5

FIG.6

## FIG.7

## FIG. 8A

## FIG. 8B

## FIG. 8C

## FIG. 8D

**FIG.9**

FIG.10

FIG.11

**FIG.12**

**FIG.13**

FIG.14

FIG.15

**Office européen des brevets**

# RAPPORT DE RECHERCHE EUROPEENNE

Numéro de la demande

EP 98 40 3338

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 5 627 460 A (BAZINET JOHN P ET AL) 6 mai 1997 * le document en entier * --- | 1 | H02M3/158 H02M7/538 |
| A | EP 0 617 501 A (LINEAR TECHN INC) 28 septembre 1994 * abrégé; figure 2 * ----- | 1 | |

**DOMAINES TECHNIQUES RECHERCHES (Int.Cl.6)**

H02M

Le présent rapport a été établi pour toutes les revendications

| Lieu de la recherche | Date d'achèvement de la recherche | Examinateur |
|---|---|---|
| LA HAYE | 13 avril 1999 | Gentili, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**   EP 98 40 3338

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-04-1999

| Document brevet cité au rapport de recherche | Date de publication | Membre(s) de la famille de brevet(s) | Date de publication |
|---|---|---|---|
| US 5627460 A | 06-05-1997 | AUCUN | |
| EP 0617501 A | 28-09-1994 | US 5481178 A | 02-01-1996 |
| | | DE 617501 T | 13-07-1995 |
| | | JP 6303766 A | 28-10-1994 |
| | | SG 43872 A | 14-11-1997 |
| | | US 5731694 A | 24-03-1998 |

EPO FORM P0460

Pour tout renseignement concernant cette annexe : voir Journal Officiel de l'Office européen des brevets, No.12/82